# EUROPÄISCHE PATENTSCHRIFT

(11) **EP 0 539 662 B1**
(45) Veröffentlichungstag und Bekanntmachung des Hinweises auf die Patenterteilung: **04.12.1996**
(21) Anmeldenummer: 92112314.7
(22) Anmeldetag: 18.07.1992
(51) Int. Cl.: A01D 78/10

(54) **Zweikreisel-Schwader**
Two-rotor windrower
Andaineuse à deux rotors

(30) Priorität: 30.10.1991 DE 4135765
(43) Veröffentlichungstag der Anmeldung: 05.05.1993
(73) Patentinhaber: CLAAS SAULGAU GMBH, D-88340 Saulgau (DE)
(72) Erfinder: Geng, Manfred, W-7968 Saulgau-Bogenweiler (DE); Wicker, Anton, W-7968 Saulgau-Bogenweiler (DE); Budde, Paul, W-4405 Nottuhn (DE)

(56) Entgegenhaltungen:
- EP-A- 0 463 323
- CH-A- 477 807
- DE-A- 2 851 524
- DE-A- 3 418 352
- FR-A- 2 356 353
- FR-A- 2 382 177
- GB-A- 1 151 647
- GB-A- 2 061 082
- GB-A- 2 095 525
- GB-A- 2 107 564
- US-A- 3 377 788

## Beschreibung

Die Erfindung bezieht sich auf einen an einen Schlepper anhängbaren Zweikreisel-Schwader nach den deutschen Patentanmeldungen P 40 19 942.8 und P 41 03 507.0.

Bei beiden Anmeldungen ist ein Zweikreisel-Schwader beansprucht, dessen Fahrgestell im Wesentlichen aus einer Zugdeichsel und einem quer zur Fahrtrichtung verlaufenden Gestellbalken besteht, an dem die Laufräder des Fahrgestelles gelagert sind. Die Größe der Schwadkreisel und deren durch das Fahrgestell bedingter Abstand voneinander bestimmen im Wesentlichen sowohl die Länge als auch die Breite der Maschine bei der Arbeit und vor allem in der Transportstellung. Die heute üblichen großen Schwadkreisel lassen es wünschenswert erscheinen, in der Arbeitsstellung die Baulänge der Maschine und in der Transportstellung sowohl die Länge als auch die Breite der Maschine zu verringern.

Die Erfindung bezweckt, beide Forderungen zu erfüllen, ohne zusätzlichen Aufwand und ohne eine Einschränkung der Funktion der Maschine. Die Verringerung der Baulänge der Maschine erfolgt dabei dadurch, daß der die Laufräder des Fahrgestelles tragende Gestellbalken schräg zur Fahrtrichtung angeordnet wird und zwar derart, daß das Ende des Gestellbalkens, das das Laufrad trägt, das vor dem nachlaufenden Schwadkreisel läuft, in Fahrtrichtung vor dem Ende des Gestellbalkens liegt, das das zwischen den Schwadkreiseln angeordnete Laufrad trägt. Darüber hinaus kann die besonders wichtige Verringerung der Breite der Maschine in der Transportstellung dadurch erzielt werden, daß der nachlaufende Schwadkreisel um eine schräg zur Fahrtrichtung liegende Achse nach oben verschwenkt werden kann.

Weitere erfindungswesentliche Merkmale ergeben sich aus den nachgeordneten Neben- und Unteransprüchen.

Der Erfindungsgegenstand wird anhand von drei Abbildungen beispielsweise erläutert.
- Figur 1: zeigt einen Zweikreisel-Schwader, schematisch in einer Ansicht von oben.
- Figur 2: zeigt eine ähnliche Maschine mit einem verschiebbaren, nachlaufenden Arbeitskreisel, ebenfalls von oben.
- Figur 3: zeigt eine ähnliche Maschine mit einem verschwenkbaren, nachlaufenden Arbeitskreisel, ebenfalls von oben.

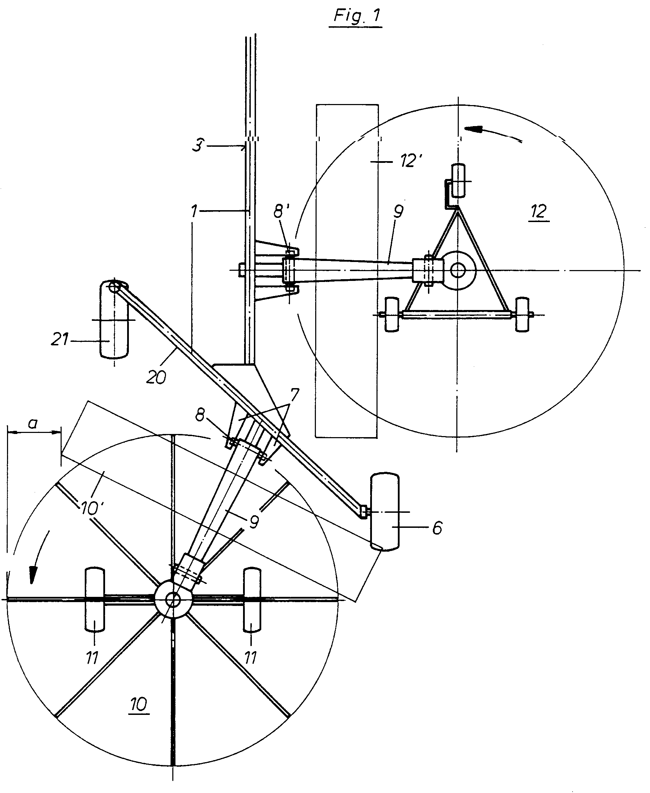

Ein Fahrgestell (1) besteht aus einem schräg zur Fahrtrichtung verlaufenden Gestellbalken (20) und einer fest damit verbundenen Deichsel (3). Am dem Gestellbalken (20) sind ein linkes Laufrad (21), das als Nachlaufrad ausgebildet ist, und ein rechtes Laufrad (6) gelagert. Bei einer Ausführung nach Figur 1 sind an der Rückseite des Gestellbalkens (20) Lagerstege (7) fest angebracht. Sie nehmen einen Gelenkbolzen (8) auf, der schräg zur Fahrtrichtung verläuft. Die Schräge des Gelenkbolzens (8) kann mit der Schräge des Gestellbalkens (20) übereinstimmen, braucht es aber nicht. Der Gelenkbolzen (8) durchsetzt einen Tragarm (9), an dessen anderem Ende ein nachlaufender Schwadkreisel (10) bekannter Bauart gelagert ist. Der Schwadkreisel (10) stützt sich auf ein Fahrwerk mit zwei Stützrädern (11) ab.

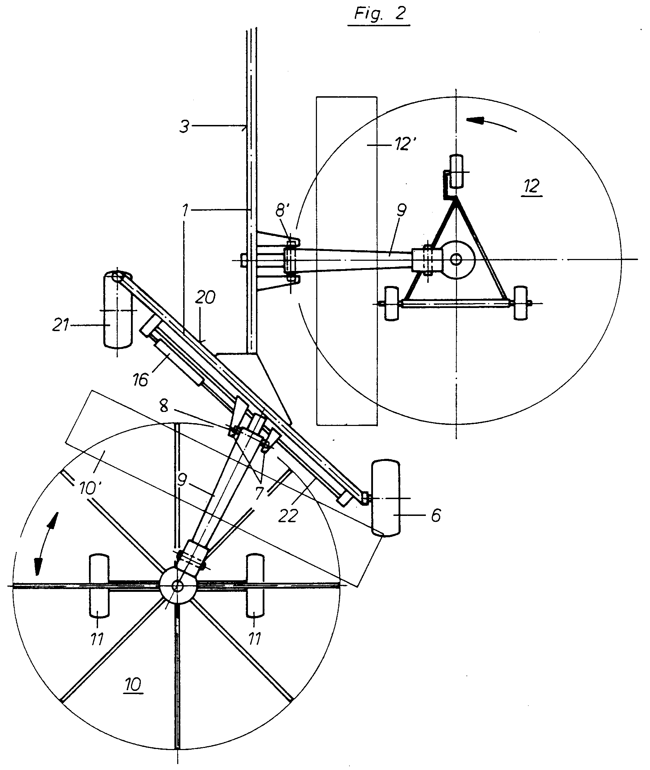

Bei einer Ausführung nach Figur 2 ist eine Gleitschiene (22) oder dergleichen fest mit der Rückseite des Gestellbalkens (20) verbunden. An der Gleitschiene (22) sind Lagerstege (7) längsbeweglich gelagert. Sie können mittels eines mit dem Gestellbalken (20) einseitig verbundenen hydraulischen Hubzylinders (16) auf der Gleitschiene (22) verschoben werden. Die Lagerstege (7) nehmen, wie in dem Beispiel nach Figur 1, einen schräg zur Fahrtrichtung verlaufenden Gelenkbolzen (8) auf, an dem wieder ein Tragarm (9) und ein Schwadkreisel (10) gelagert sind.

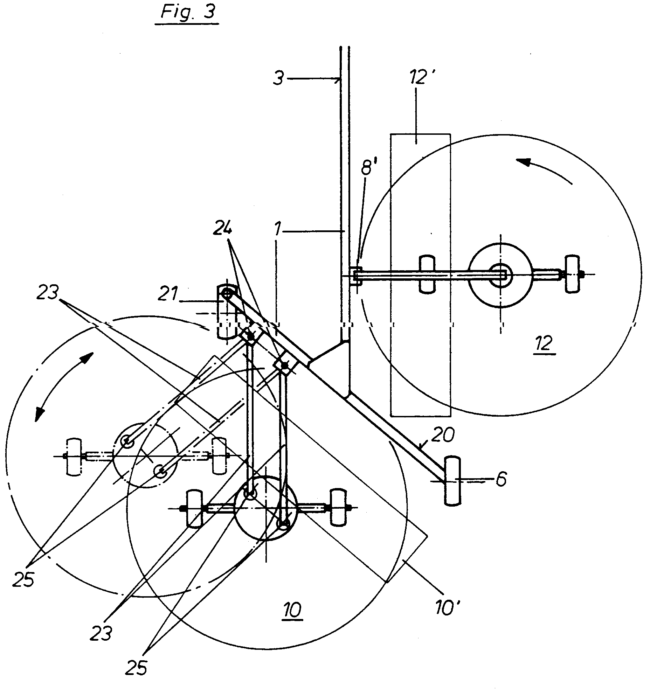

Bei einer weiteren Ausführung nach Figur 3 ist der nachlaufende Schwadkreisel (10) mittels zweier paralleler Tragarme (23) in zwei Ebenen gelenkig mit dem Gestellbalken (20) verbunden. Vordere Gelenkstellen (24) sind um eine vertikale Achse und um eine horizontale Achse schwenkbar. Die gedachte Verbindungslinie zwischen den beiden Gelenkstellen (24) liegt schräg zur Fahrtrichtung. Zwei hintere Gelenkstellen (25) verbinden die Tragarme (23) mit dem Schwadkreisel (10). Deren Verbindungslinie liegt parallel zu der Verbindungslinie der vorderen Gelenkstellen (24). Dadurch entsteht ein Gelenkparallelogramm, das es erlaubt, den Schwadkreisel (10) in einer Horizontalebene relativ zu dem Gestellbalken (20) zu verschwenken. Darüber hinaus kann der Schwadkreisel (10) für eine Transportstellung um die Gelenkstellen (24) nach oben verschwenkt werden. Das Verschwenken in beiden Ebenen kann zweckmäßigerweise durch nicht dargestellte hydraulische Stellglieder erfolgen.

Ein vorderer Schwadkreisel (12) (Figuren 1, 2, 3) ist bei allen drei Ausführungsbeispielen um eine horizontale, etwa in Fahrtrichtung liegende Schwenkachse (8') gelenkig mit der Deichsel (3) verbunden. Die Funktion entspricht derjenigen der Stammanmeldungen.

Der Zweikreisel-Schwader entspricht in der Wirkungsweise denjenigen der Stammanmeldungen. In der Arbeitsstellung können die Schwadkreisel (10, 12) aber wegen der besonderen Ausgestaltung des Gestellbalkens (20) näher zusammengerückt werden, als bei den vorbekannten Ausführungen. In der Transportstellung nehmen die Schwadkreisel (10, 12) Stellungen ein, wie sie mit (10', 12') gekennzeichnet sind. Die Transportbreite ist hierbei um den Betrag a) (Figur 1) kleiner, als bei sonst ähnlichen Maschinen nach der deutschen Patentanmeldung P 40 19 942.8.

## Patentansprüche

1. An einen Schlepper anhängbarer Zweikreisel-Schwader mit zwei von Stützrädern getragenen Schwadkreiseln, die in Fahrtrichtung gestaffelt angeordnet sind und einem mindestens zweirädrigen Fahrgestell, dessen eines Laufrad in dem Zwischenraum zwischen den beiden Schwadkreiseln und dessen anderes Laufrad vor dem nachlaufenden Schwadkreisel angeordnet sind, dadurch gekennzeichnet, daß der die beiden Laufräder (6, 21) tragende Gestellbalken (20) des Fahrgestelles (1) schräg zur Fahrtrichtung angeordnet ist.

2. An einen Schlepper anhängbarer Zweikreisel-Schwader mit zwei von Stützrädern getragenen Schwadkreiseln, die in Fahrtrichtung gestaffelt angeordnet sind und einem mindestens zweirädrigen Fahrgestell, dessen eines Laufrad in dem Zwischenraum zwischen den beiden Schwadkreiseln und dessen anderes Laufrad vor dem nachlaufenden Schwadkreisel angeordnet sind, nach Anspruch 1, dadurch gekennzeichnet, daß einer der Schwadkreisel (12) seitlich an dem Fahrgestell (1) um eine etwa in Fahrtrichtung liegende Schwenkachse (8') höhenbeweglich angelenkt ist, während der andere Schwadkreisel (10) um eine schräg zur Fahrtrichtung liegende Schwenkachse (8) höhenbeweglich an der Rückseite des Gestellbalkens (20) des Fahrgestelles (1) angelenkt ist.

3. Zweikreisel-Schwader nach Anspruch 2, dadurch gekennzeichnet, daß die gelenkige Verbindung der Schwadkreisel (10, 12) mit dem Fahrgestell (1) so ausgestaltet ist, daß sie eine begrenzte Drehbewegung der Schwadkreisel (10, 12) um die Achse ihrer Tragarme (9) und um eine Achse etwa parallel zu ihren jeweiligen Schwenkachsen (8, 8') zuläßt.

4. Zweikreisel-Schwader nach den Ansprüchen 1 - 3, dadurch gekennzeichnet, daß das vor dem nachlaufenden Schwadkreisel (10) angeordnete Laufrad (21) als Nachlaufrad ausgebildet ist.

5. Zweikreisel-Schwader mit zwei von Stützrädern getragenen Schwadkreiseln, die in Fahrtrichtung gestaffelt zueinander an einem Fahrgestell angeordnet sind, dessen eines Laufrad zwischen den beiden Schwadkreiseln und dessen anderes Laufrad vor dem nachlaufenden Schwadkreisel angeordnet sind und dessen einer Schwadkreisel relativ zu dem Fahrgestell quer verschiebbar bzw. quer beweglich ist, dadurch gekennzeichnet, daß der verschiebbare, versetzbare oder verschwenkbare Schwadkreisel (10) an einem Gestellbalken (20) des Fahrgestelles (1) angeordnet ist, der schräg zur Fahrtrichtung verläuft.

6. Zweikreisel-Schwader mit zwei von Stützrädern getragenen Schwadkreiseln, die in Fahrtrichtung gestaffelt zueinander an einem Fahrgestell angeordnet sind, dessen eines Laufrad zwischen den beiden Schwadkreiseln und dessen anderes Laufrad vor dem nachlaufenden Schwadkreisel angeordnet sind und dessen einer Schwadkreisel relativ zu dem Fahrgestell quer verschiebbar bzw. quer beweglich ist, nach Anspruch 5, dadurch gekennzeichnet, daß der verschiebbare, versetzbare oder verschwenkbare Schwadkreisel (10) um eine schräg zur Fahrtrichtung liegende Schwenkachse (8) höhenbeweglich am Gestellbalken (20) des Fahrgestelles (1) angelenkt ist.

7. Zweikreisel-Schwader, nach den Ansprüchen 5 und 6, dadurch gekennzeichnet, daß an dem schräg zur Fahrtrichtung verlaufenden Gestellbalken (20) verschiebbare Lagerstege (7) vorhanden sind, an die ein Tragarm (9) eines Schwadkreisels (10) höhenverschwenkbar angelenkt ist.

8. Zweikreisel-Schwader, nach Anspruch 5, dadurch gekennzeichnet, daß der schräg zur Fahrrichtung verlaufende Gestellbalken (20) zwei Gelenkpunkte (24) besitzt, an denen zwei Tragarme (23) eines Schwadkreisels (10) nach Art eines Gelenkparallelogrammes derart angelenkt sind, daß sie sowohl um eine schräg oder Quer zur Fahrtrichtung verlaufende Horizontalachse, die durch eine gedachte Verbindungslinie zwischen den beiden Gelenkpunkten (24) bestimmt ist, höhenschwenkbar sind als auch in einer Horizontalebene verschwenkt und festgestellt werden können.

## Claims

1. A twin-rotor windrower which can be attached to a tractor, comprising two windrowing rotors which are carried by support wheels and which are arranged staggered in the direction of travel, and an at least two-wheel chassis of which one wheel is arranged in the space between the two windrowing rotors and the other wheel is arranged in front of the trailing windrowing rotor, characterised in that the bed (20) of the chassis (1), which carries the two chassis wheels (6, 21) is arranged inclinedly relative to the direction of travel.

2. A twin-rotor windrower which can be attached to a tractor, comprising two windrowing rotors which are carried by support wheels and which are arranged staggered in the direction of travel, and an at least two-wheel chassis of which one wheel is arranged in the space between the two windrowing rotors and the other wheel is arranged in front of the trailing windrowing rotor according to claim 1 characterised in that one of the windrowing rotors (12) is mounted laterally to the chassis (1) pivotably movably in respect of height about a pivot axis (8') which is disposed approximately in the direction of travel while the other windrowing rotor (10) is mounted to the rear side of the bed (20) of the chassis (1) pivotably movably in respect of height about a pivot axis (8) which is disposed inclinedly relative to the direction of travel.

3. A twin-rotor windrower according to claim 2 characterised in that the pivotal connection of the windrowing rotors (10, 12) to the chassis (1) is so designed that it permits a limited rotational movement of the windrowing rotors (10, 12) about the axis of their support arms (9) and about an axis approximately parallel to their respective pivot axes (8, 8').

4. A twin-rotor windrower according to claim 1 to 3 characterised in that the chassis wheel (21) arranged in front of the trailing windrowing rotor (10) is in the form of a trailing wheel.

5. A twin-rotor windrower comprising two windrowing rotors which are carried by support wheels and which are arranged on a chassis in staggered relationship with each other in the direction of travel, one wheel of the chassis being arranged between the two windrowing rotors and the other wheel of the chassis being arranged in front of the trailing windrowing rotor and one windrowing rotor being transversely movable or transversely slidable relative to the chassis, characterised in that the slidable, displaceable or pivotable windrowing rotor (10) is arranged on a bed (20) of the chassis (1), which extends inclinedly relative to the direction of travel.

6. A twin-rotor windrower comprising two windrowing rotors which are carried by support wheels and which are arranged on a chassis in staggered relationship with each other in the direction of travel, one wheel of the chassis being arranged between the two windrowing rotors and the other wheel of the chassis being arranged in front of the trailing windrowing rotor and one windrowing rotor being transversely movable or transversely slidable relative to the chassis according to claim 5 characterised in that the slidable, displaceable or pivotable windrowing rotor (10) is mounted to the bed (20) of the chassis (1) pivotably movably in respect of height about a pivot axis (8) which is disposed inclinedly relative to the direction of travel.

7. A twin-rotor windrower according to claims 5 and 6 characterised in that provided on the chassis bed (20) which extends inclinedly relative to the direction of travel are slidable mounting bars (7) to which a support arm (9) of a windrowing rotor (10) is mounted pivotably in respect of height.

8. A twin-rotor windrower according to claim 5 characterised in that the chassis beam (20) which extends inclinedly relative to the direction of travel has two pivot points (24) to which two support arms (23) of a windrowing rotor (10) are mounted in the manner of a pivot parallelogram in such a way that they are both pivotable in respect of height about a horizontal axis which extends inclinedly or transversely to the direction of travel and which is determined by a notional connecting line between the two pivot points (24), and they can also be pivoted and fixed in a horizontal plane.

## Revendications

1. Andaineuse à deux rotors pouvant être attelée à un tracteur et comportant deux rotors d'andainage portés par des roues de support et qui sont disposés d'une manière échelonnée dans la direction de déplacement, et un châssis comportant au moins deux roues dont l'une est disposée dans l'espace intercalaire présent entre les deux rotors d'andainage et dont l'autre est disposée en avant du rotor d'andainage situé en arrière, caractérisée en ce que la barre (20) qui porte les deux roues (6,21) du châssis (1) est disposée obliquement par rapport à la direction de déplacement.

2. Andaineuse à deux rotors pouvant être attelée à un tracteur et comportant deux rotors d'andainage portés par des roues de support et qui sont disposés d'une manière échelonnée dans la direction de déplacement, et un châssis comportant au moins deux roues dont l'une est disposée dans l'espace intercalaire présent entre les deux rotors d'andainage et dont l'autre est disposée en avant du rotor d'andainage situé en arrière selon la revendication 1, caractérisée en ce que l'un des rotors d'andainage (12) est articulé latéralement sur le châssis (1) de manière à être déplaçable en hauteur autour d'un axe de basculement (8') qui s'étend approximativement dans la direction de déplacement, tandis que l'autre rotor d'andainage (10) est articulé sur le côté arrière de la barre (20) du châssis (1) de manière à être déplaçable en hauteur autour d'un axe de basculement (8) disposé obliquement par rapport à la direction de déplacement.

3. Andaineuse à deux rotors selon la revendication 2, caractérisée en ce que la liaison articulée des rotors d'andainage (10,12) au châssis (1) est agencée de telle sorte qu'elle permet un mouvement de rotation limité des rotors d'andainage (10,12) autour de l'axe de leurs bras de support (9) et autour d'un axe approximativement parallèle à leurs axes respectifs de basculement (8,8').

4. Andaineuse à deux rotors selon les revendications 1-3, caractérisée en ce que la roue (21) disposée en avant du rotor d'andainage (10) situé en arrière est agencée en tant que roue asservie.

5. Andaineuse à deux rotors comportant deux rotors portés par des roues de support et qui sont disposés d'une manière échelonnée dans la direction de déplacement, et un châssis comportant au moins deux roues dont l'une est disposée dans l'espace intercalaire présent entre les deux rotors d'andainage et dont l'autre est disposée en avant du rotor d'andainage situé en arrière, et dont l'un des rotors d'andainage est translatable transversalement ou est mobile transversalement par rapport au châssis, caractérisée en ce que le rotor d'andainage (10) qui peut être translaté décalé ou basculé, est disposé sur une barre (30) du châssis (1) qui s'étend obliquement par rapport à la direction de déplacement.

6. Andaineuse à deux rotors portés par des roues de support et qui sont disposés d'une manière échelonnée dans la direction de déplacement, et un châssis comportant au moins deux roues dont l'une est disposée dans l'espace intercalaire présent entre les deux rotors d'andainage et dont l'autre est disposée en avant du rotor d'andainage situé en arrière, suivant la revendication 5, caractérisée en ce que le rotor d'andainage (10) qui peut être translaté, décalé ou basculé, est articulé sur la barre (20) du châssis (1) de manière à être déplaçable en hauteur autour d'un axe de basculement (8) qui s'étend obliquement par rapport à la direction de déplacement.

7. Andaineuse à deux rotors selon les revendications 5 et 6, caractérisée en ce que sur la barre (20) du châssis qui s'étend obliquement par rapport à la direction de déplacement, sont disposées des barrettes de support (7) sur lesquelles un bras de support (9) d'un rotor d'andainage (10) est articulé de manière à pouvoir basculer en hauteur.

8. Andaineuse à deux rotors selon la revendication 5, caractérisée en ce que la barre (20) du châssis qui s'étend obliquement par rapport à la direction de déplacement possède deux points d'articulation (24) sur lesquels deux bras de support (23) d'un rotor d'andainage (10) sont articulés à la manière d'un parallélogramme articulé de telle sorte qu'ils peuvent basculer en hauteur autour d'un axe horizontal qui s'étend obliquement transversalement par rapport à la direction de déplacement et qui est déterminé par une droite imaginaire reliant les deux points d'articulation (24), et peuvent également basculer et être fixés dans un plan horizontal.
